# FASCICULE DE BREVET EUROPEEN

(11) **EP 2 964 724 B1**
(45) Date de publication et mention de la délivrance du brevet: **07.09.2022**
(21) Numéro de dépôt: 14709604.4
(22) Date de dépôt: 06.03.2014
(51) Int. Cl.: C09K 11/06, C08L 25/00, C08L 33/00, G01T 1/00

(54) **MATERIAUX SCINTILLATEURS PLASTIQUES, SCINTILLATEURS PLASTIQUES COMPRENANT CES MATERIAUX ET PROCEDE POUR DISCRIMINER LES NEUTRONS DES RAYONS GAMMA UTILISANT CES SCINTILLATEURS.**
KUNSTSTOFFSZINTILLATORMATERIALIEN, KUNSTSTOFFSZINTILLATOREN MIT SOLCHEN MATERIALIEN UND VERFAHREN ZUR UNTERSCHEIDUNG ZWISCHEN NEUTRONEN UND GAMMASTRAHLEN MITHILFE DIESER SZINTILLATOREN
PLASTIC SCINTILLATOR MATERIALS, PLASTIC SCINTILLATORS COMPRISING SUCH MATERIALS AND METHOD FOR DISTINGUISHING NEUTRONS FROM GAMMA RAYS USING SAID SCINTILLATORS

(30) Priorité: 07.03.2013 FR 1352072
(43) Date de publication de la demande: 13.01.2016
(73) Titulaire: Commissariat à l'Énergie Atomique et aux Énergies Alternatives, 75015 Paris (FR)
(72) Inventeur: HAMEL, Matthieu, F-50100 Cherbourg-octeville (FR); BLANC, Pauline, F-75005 Paris (FR); NORMAND, Stéphane, F-50540 Isigny-le-buat (FR); DEHE-PITTANCE, Chrystele, F-78130 Maurepas (FR)
(74) Mandataire: Brevalex
(86) Numéro de dépôt international: PCT/EP2014/054359
(87) Numéro de publication internationale: WO 2014/135640

(56) Documents cités:
- WO-A2-2012/142365
- FR-A1- 2 969 169
- NATALIA ZAITSEVA ET AL: "Plastic scintillators with efficient neutron/gamma pulse shape discrimination", NUCLEAR INSTRUMENTS & METHODS IN PHYSICS RESEARCH. SECTION A: ACCELERATORS, SPECTROMETERS, DETECTORS, AND ASSOCIATED EQUIPMENT, ELSEVIER BV * NORTH-HOLLAND, NETHERLANDS, vol. 668, 23 novembre 2011 (2011-11-23), pages 88-93, XP028437952, ISSN: 0168-9002, DOI: 10.1016/J.NIMA.2011.11.071 [extrait le 2011-12-13]

## Description

### DOMAINE TECHNIQUE

L'invention concerne un matériau scintillateur plastique, à savoir un matériau comprenant une matrice polymérique dans laquelle est incorporé au moins un composé fluorescent, selon les revendications 1-11.

L'invention a trait en outre à un scintillateur plastique comprenant ce matériau.

L'invention concerne enfin un procédé pour discriminer les neutrons des rayons gamma utilisant ces scintillateurs.

Précisons que, dans l'ensemble de la présente description, on entend par scintillateur plastique, un appareil comprenant ledit matériau scintillateur mis sous la forme adéquate pour son utilisation.

Le domaine technique de l'invention peut, de manière générale, être défini comme celui de la détection des particules, telles que les neutrons, et des rayonnements.

Plus exactement, le domaine technique de l'invention peut être défini comme celui de la détection sélective des neutrons et en particulier des neutrons rapides par rapport aux rayons gamma.

L'invention trouve notamment son application dans l'instrumentation nucléaire, la physique des particules, la recherche fondamentale et appliquée en physique, l'industrie pétrolière, et la lutte anti-terroriste pour détecter les menaces nucléaire et radiologique (NR).

### ÉTAT DE LA TECHNIQUE ANTÉRIEURE

Il existe de nombreux domaines dans lesquels la détection des neutrons est importante et où il est nécessaire de disposer d'une information fiable et précise sur leur signature.

Malheureusement, la détection des neutrons est toujours gênée par le fait que, simultanément au signal dû aux neutrons, sont recueillis d'autres signaux parasites dus notamment aux émissions gamma. En particulier, la détection des neutrons rapides, et la discrimination de leur signal par rapport au signal des rayons gamma est primordiale dans de nombreux domaines, notamment celui de la détection du trafic illicite de matières nucléaires telle que le plutonium.

A cet égard, le document [1] étudie les différents détecteurs de neutrons et de rayons gamma actuellement disponibles sur le marché qui sont notamment mis en œuvre dans les portiques de détection des rayonnements (« *Radiation Portal Monitors* » ou RPM en langue anglaise) aux points de transit tels que les frontières, les aéroports, les ports et les gares afin de détecter de faibles quantités de matières radioactives transportées par des personnes ou dans des véhicules ou conteneurs.

Il apparaît qu'aucun des appareils présentés dans ce document n'est totalement satisfaisant et que tous présentent aussi bien des avantages que des inconvénients.

Les scintillateurs plastiques présentent l'intérêt de présenter un faible coût, notamment dans les applications de sécurité aux frontières (lutte anti-terroriste associée au risque nucléaire et radiologique NR) où des quantités importantes de détecteurs sont nécessaires.

Les scintillateurs plastiques comprennent des molécules fluorescentes figées dans un polymère possédant des propriétés de transparence à leur propre longueur d'onde d'émission. Ces scintillateurs plastiques doivent posséder un certain nombre de propriétés, énumérées par exemple dans le document [2], pour être compatible avec les critères, mentionnés dans le document [3] auxquels doivent répondre les détecteurs neutroniques.

On a longtemps considéré que l'on ne pouvait pas réaliser de discrimination par forme d'impulsion entre neutrons rapides et gamma dans les scintillateurs plastiques.

Cependant, le document [4] (BROOKS) concerne un matériau scintillateur plastique constitué par une matrice polymère qui contient des fluorophores.

Ce document étudie l'influence de diverses variables sur la discrimination par forme d'impulsion (« *Pulse Shape Discrimination* » ou « *PSD* » en langue anglaise) obtenue avec ce scintillateur.

Ces variables sont :
- la nature du monomère principal à partir duquel est préparé le polymère. Le styrène, le méthylstyrène, et le vinyltoluène sont étudiés.
- les conditions de la polymérisation.
- la mise en œuvre d'un monomère secondaire choisi parmi le naphtalène et le 4-isopropyl-biphényle (IP) pour préparer le polymère.
- l'utilisation d'un composé qui provoque une réticulation du polymère choisi parmi le divinylbenzène (DVB) et le méthacrylate d'allyle.
- les fluorophores, choisis parmi le p-terphényle, le PPO, le PBD, et le POPOP, et leurs concentrations.

Un scintillateur plastique préféré est constitué par un polymère non-réticulé de vinyltoluène comprenant 10% en poids de IP, contenant 35 g/L de *p*-terphényle et 0,5 g/L de POPOP.

Le scintillateur de ce document présente des déformations et un blanchiment importants au cours du temps qui rendent son utilisation pratiquement impossible.

Le document [5] décrit la préparation d'un scintillateur composite comprenant des grains de monocristaux organiques tels que le stilbène ou le *p*-terphényle figés dans une matrice de polysiloxane.

Ce scintillateur n'a pas démontré d'efficacité pour réaliser une discrimination n/y au-delà de quelques centimètres d'épaisseur.

Le document [6] concerne un scintillateur plastique comprenant une matrice polymérique qui contient un fluorophore primaire à une teneur supérieure à 5% en masse et éventuellement un fluorophore secondaire.

Il est précisé que le fluorophore peut être réticulé avec la matrice polymérique mais il n'est pas indiqué que celle-ci soit elle-même réticulée.

La matrice polymérique peut être un polymère choisi notamment parmi le polyvinyltoluène (PVT), le polystyrène, et le polyvinylxylène.

Le fluorophore secondaire peut être par exemple le 1,4-bis-(5-phényl-2-oxazolyl)-benzène (POPOP) ou le 1,4-bis-(2-méthylstyryl)-benzène (Bis-MSB).

Le scintillateur de ce document manque de stabilité au cours du temps.

Le document [7] a trait à des matériaux luminescents pour la discrimination neutrons/gamma qui comprennent un matériau hôte dopé par un luminophore.

Le matériau hôte peut être un polymère tel que le polyvinylcarbazole, le polyvinyltoluène ou le polystyrène.

Le luminophore est un complexe organométallique dont la préparation est longue et nécessite plusieurs étapes. Il est donc difficile d'obtenir de grandes quantités de ce complexe; ce qui empêche l'utilisation du matériau luminescent de ce document pour préparer des scintillateurs d'un volume important, par exemple supérieur à 5 L.

Enfin, le document [8] concerne un scintillateur pour hautes températures qui comprend un polymère hôte qui contient un agent fluorescent primaire et un convertisseur de longueur d'onde.

Le polymère hôte est un copolymère réticulé avec un agent de réticulation aromatique, par exemple un copolymère d'un dérivé du styrène tel que le *t*-butylstyrène, et d'un composé à point de fusion plus élevé, tel que le 4-vinylbiphényle. L'agent de réticulation est par exemple le divinylbenzène.

L'agent fluorescent primaire est par exemple le *p*-terphényle et le convertisseur de longueur d'onde est par exemple le 2,5-bis(4-biphénylyl)-1,3,4-oxadiazole.

Le scintillateur de ce document ne peut pas réaliser de discrimination entre neutrons rapides et gamma.

Document FR2399683 divulgue des matériaux scintillateurs plastiques comprenant une matrice polymérique dans laquelle est incorporé un composé fluorescent et une matrice polymérique qui est constituée par un polymère réticulé obtenu par rayonnement UV d'une résine époxy acrylée qui est obtenue par la polymérisation d'épichlorhydrine, bisphénol A et l'acide méthacrylique. Cette résine est formée dans une matrice polymère réticulée enrobant les particules d'agent luminescent.

Il apparaît au regard de ce qui précède, que l'incorporation d'une molécule fluorescente, généralement à une concentration élevée, par exemple supérieure à 10% en masse, est à l'origine d'une forte dégradation de la tenue physicochimique et morphologique des matériaux scintillateurs plastiques qui se manifeste donc en particulier par des phénomènes de blanchiment et de déformation au cours du temps.

Or, le moindre relargage ou précipitation d'un fluorophore qui entraîne notamment un blanchiment du matériau dégrade de manière irréversible les performances du scintillateur tant en terme de qualité de scintillation qu'en terme de qualité de discrimination.

En outre, les matériaux scintillateurs de l'art antérieur tel que représenté par les documents étudiés plus haut possèdent une transparence encore insuffisante.

En effet, les matériaux scintillateurs étant par définition des matériaux émettant de la lumière après une interaction entre un rayonnement et la matière, des pertes d'efficacité géométriques sont inéluctables mais il est crucial de parvenir à une efficacité intrinsèque du matériau scintillateur lui-même, de 100%, et le polymère constituant la matrice doit donc être le plus transparent possible à la longueur d'onde d'émission du ou des fluorophore(s) incorporé(s).

Il existe donc, au regard de ce qui précède, un besoin pour un matériau scintillateur organique plastique qui permette une discrimination effective entre le signal des neutrons rapides et le signal des rayons gamma, et qui, en outre, ne soit pas sujet à un vieillissement aussi bien physique que morphologique au cours du temps.

En d'autres termes, il existe un besoin pour un matériau scintillateur plastique dont la stabilité au cours du temps soit améliorée, dont les propriétés physicochimiques soient maintenues au cours du temps et qui, notamment, ne présente pas de blanchiment, ni de déformation -les effets liés aux rayonnements ionisants étant mis à part- au cours du temps.

En particulier, les performances de ce matériau scintillateur aussi bien en termes de qualité de scintillation qu'en termes de qualité de discrimination, initialement excellentes, ne doivent pas se dégrader au cours du temps même sur une durée pouvant atteindre plusieurs années.

Il existe encore un besoin pour un matériau scintillateur plastique qui permette de préparer des scintillateurs de grand volume, pouvant atteindre jusqu'à 1 m³, notamment pour les portiques de détection des rayonnements.

Il existe aussi un besoin pour un matériau scintillateur plastique qui soit plus transparent que les matériaux de l'art antérieur.

Il existe enfin un besoin pour un matériau scintillateur plastique qui puisse être préparé avec des produits de base facilement disponibles et d'un faible coût, qui soit globalement moins coûteux que les matériaux de l'art antérieur et qui puisse être préparé par un procédé plus simple que les matériaux de l'art antérieur.

### EXPOSÉ DE L'INVENTION

Ce but, et d'autres encore, sont atteints, conformément à l'invention, par un matériau scintillateur plastique comprenant une matrice polymérique dans laquelle est incorporé au moins un composé fluorescent à une concentration en masse supérieure ou égale à 10% en masse de la masse totale du matériau, dans lequel la matrice polymérique est constituée par un polymère réticulé susceptible d'être obtenu par polymérisation d'un mélange comprenant au moins un monomère aromatique et au moins un monomère jouant le rôle d'agent de réticulation choisi parmi les diacrylates d'alkyle, les diméthacrylates d'alkyle, et leurs mélanges, les proportions en moles du monomère jouant le rôle d'agent de réticulation et du monomère aromatique dans le mélange étant respectivement de 10% à 50% et de 90% à 50%.

Généralement, ledit au moins un composé fluorescent est un composé organique.

Dans la présente, lorsqu'il est fait mention d'un groupe alkyle et, sauf précisé autrement, on entend généralement un groupe alkyle linéaire ou ramifié généralement de 1 à 20C, de préférence de 1 à 10C, de préférence encore de 2 à 6C, mieux de 2 à 4C tel qu'un groupe méthyle, éthyle, isopropyle, n-propyle, n-butyle, isobutyle ou tertiobutyle ; ou un groupe alkyle cyclique généralement de 3 à 10C, de préférence de 3 à 6C tel qu'un groupe cyclopropyle, cyclobutyle, cyclopentyle, ou cyclohexyle.

De préférence, ledit au moins un composé fluorescent est incorporé à une concentration en masse de 10% à 30% en masse de la masse totale du matériau.

Par monomère aromatique on entend généralement, dans la présente, un monomère comprenant au moins un cycle aromatique, et en outre un groupe polymérisable.

Ledit groupe polymérisable est généralement choisi parmi les groupes comprenant une double liaison carbone-carbone éthyléniquement insaturée tel que le groupe vinyle.

Le matériau de scintillateur plastique selon l'invention n'a jamais été décrit dans l'art antérieur, tel que défini notamment par les documents cités plus haut.

Le matériau selon l'invention se distingue fondamentalement des matériaux de scintillateur plastique de l'art antérieur en ce que sa matrice polymérique est constituée par un polymère spécifique.

Ce polymère est tout d'abord défini par le fait qu'il s'agit d'un polymère réticulé, en d'autre termes un copolymère qui est préparé par polymérisation d'un monomère principal, aromatique, et d'un monomère jouant le rôle d'agent de réticulation.

Dans les matériaux de scintillateur plastique de l'art antérieur, c'est la plupart du temps un homopolymère non réticulé tel qu'un polystyrène ou un polyvinyltoluène qui est utilisé.

En outre, le monomère jouant le rôle d'agent de réticulation est un monomère spécifique qui est choisi parmi les diacrylates d'alkyle, les diméthacrylates d'alkyle et leurs mélanges.

Enfin, de manière surprenante, les inventeurs ont mis en évidence que toutes les fractions molaires entre le monomère aromatique et le monomère qui joue le rôle d'agent de réticulation ne convenaient pas pour la préparation d'un matériau de scintillateur plastique, et que les proportions en moles du monomère jouant le rôle d'agent de réticulation et du monomère aromatique dans le mélange (qui sont aussi les proportions en moles des motifs issus du monomère jouant le rôle d'agent de réticulation et des motifs issus du monomère aromatique dans le polymère réticulé) doivent être respectivement de 10% à 50% et de 90% à 50%.

Le matériau selon l'invention répond entre autres aux besoins et exigences énumérés plus haut pour un matériau scintillateur plastique, ne présente pas les défauts des matériaux scintillateurs plastiques de l'art antérieur et apporte une solution aux problèmes présentés par les matériaux scintillateurs plastiques de l'art antérieur.

Le matériau scintillateur plastique selon l'invention dont la matrice polymérique est constituée par le polymère réticulé spécifique décrit plus haut possède notamment des propriétés de scintillation, de transparence, de stabilité dans le temps, de solidité et de rigidité dans le temps améliorées par rapport aux matériaux scintillateurs plastiques dont la matrice polymérique est constituée par un homopolymère, non réticulé ou bien par un polymère réticulé par des agents de réticulation, réticulants autres que les acrylates d'alkyle et les méthacrylates d'alkyle.

Sans vouloir être lié par aucune théorie, il semblerait que grâce à la mise en œuvre d'un agent de réticulation, qui plus est un agent de réticulation spécifique et à une teneur élevée, la polymérisation est plus rapidement totale, complète, la cinétique de polymérisation est accrue, le matériau se trouve rapidement figé et le(s) composé(s) fluorescent(s), pourtant présent(s) à une concentration élevée, supérieure ou égale à 10% en masse, est (sont) immobilisé(s) et ne peut (peuvent) être relargué(s).

La réticulation empêche le blanchiment du matériau selon l'invention alors même qu'il contient une teneur élevée en composé fluorescent, supérieure ou égale à 10% en masse de la masse totale du matériau. Ce blanchiment est dû au fait que la polymérisation, dans les matériaux de l'art antérieur, n'est pas complète et qu'il se produit un relargage du composé fluorescent (du chromophore).

Ainsi, par rapport au matériau scintillateur décrit dans le document [8] qui comporte une matrice constituée par un copolymère réticulé dont l'agent de réticulation est le divinylbenzène, l'utilisation dans le matériau selon l'invention de diacrylates d'alkyle ou de diméthacrylates d'alkyle en tant qu'agent réticulant permet d'obtenir un gain en transparence substantiel.

Les diméthacrylates d'alkyle sont encore préférés car ils sont plus transparents que les diacrylates d'alkyle.

Par rapport au matériau de scintillateur qui fait l'objet du document [4] qui comporte une matrice constituée par un polymère qui peut être réticulé par du méthacrylate d'allyle, on obtient une meilleure stabilisation et une meilleure rigidité. En effet, les groupements allyliques donnent suite à des polymères de faible masse molaire moyenne en raison de la réaction de transfert d'hydrogène.

En outre, il a été constaté que si la proportion en agent de réticulation était inférieure à 10% en moles, il se produisait un blanchiment du polymère dans sa globalité, tandis que si la proportion d'agent de réticulation était supérieure à 50% en moles alors la scintillation du matériau était réduite.

Le copolymère selon l'invention, qui non seulement est réticulé mais présente un taux de réticulation important possède des propriétés au cours du temps améliorées par rapport aux polymères de l'art antérieur.

En conclusion, on peut dire que le matériau selon l'invention n'est plus sujet à un quelconque vieillissement physique ou morphologique, à un blanchiment et à des déformations au cours du temps.

Le matériau selon l'invention présente initialement d'excellentes propriétés de discrimination entre les neutrons rapides et les rayons gamma, d'excellentes propriétés de scintillation et d'excellentes propriétés physico-chimiques telles qu'une très bonne rigidité, ainsi qu'une très grande transparence. Toutes ces propriétés ne sont pas dégradées au cours du temps, sont maintenues au cours du temps, au contraire des matériaux de l'art antérieur. Le matériau scintillateur selon l'invention, au contraire des matériaux de l'art antérieur, peut être utilisé pendant plusieurs années (si l'on ne tient pas compte, bien sûr, du vieillissement dû aux rayonnements lors de son utilisation) et possède toujours d'excellentes performances.

Le matériau selon l'invention est plus transparent, peu coûteux, plus stable, et plus facile à préparer que les matériaux scintillateurs et discriminants de l'art antérieur. Il peut être préparé simplement en grandes quantités avec des composés simples, largement disponibles dans le commerce, et peu coûteux.

Ainsi, on peut selon l'invention, pour la première fois, préparer des scintillateurs plastiques de grand volume, par exemple supérieur à 1 Litre, ce qui n'était pas possible avec les matériaux scintillateurs de l'art antérieur.

Avantageusement, les proportions en moles de l'agent de réticulation et du monomère aromatique dans le mélange peuvent être respectivement de 15% à 20% et de 85% à 80%.

De préférence, le monomère aromatique peut être choisi parmi le styrène ; les styrènes substitués par un ou plusieurs groupe(s) alkyle tel(s) que le *t*-butylstyrène et ses isomères, le vinyltoluène et ses isomères, et le vinylxylène et ses isomères; le vinylnaphtalène éventuellement substitué par un ou plusieurs groupe(s) alkyle ; le *N-*vinylcarbazole ; et leurs mélanges.

De préférence, le monomère jouant le rôle d'agent de réticulation est le diméthacrylate de 1,4-butanediyle. En effet, il a été mis en évidence que le coefficient de retrait de cet agent de réticulation était particulièrement faible.

La matrice polymérique peut contenir en tant que composé fluorescent, un premier composé fluorescent, généralement organique, choisi parmi les composés présentant un spectre d'absorption dont l'intensité maximale d'absorption se situe entre 250 nm et 350 nm, par exemple est de 300 nm , et un spectre d'émission qui se situe entre 340 nm et 400 nm.

Ce premier composé fluorescent peut être le seul composé fluorescent présent dans la matrice polymérique.

De préférence, le premier composé fluorescent est le biphényle.

Avantageusement, le premier composé fluorescent peut être incorporé à raison de 10% à 30% en masse, par exemple à raison de 16,65% en masse, de la masse totale du matériau.

La matrice polymérique peut contenir en outre un deuxième composé fluorescent, généralement organique, choisi parmi les composés présentant un spectre d'absorption qui recouvre le spectre d'émission du premier composé fluorescent, et un spectre d'émission qui se situe entre 350 nm et 650 nm , avec une intensité maximale d'émission entre 400 nm et 600 nm.

De préférence, le deuxième composé fluorescent peut être choisi parmi le bis-méthystyrylbenzène (bis-MSB), le 1,4-di-[2-(5-phényloxazolyl)] benzène (POPOP), le 9,10-diphénylanthracène, le 4-éthoxy-N-(2',5'-di-*t*-butylphényl)-1,8-naphtalimide, et la 3-hydroxyflavone.

Avantageusement, le deuxième composé fluorescent peut être incorporé à raison de 0,01% à 1% en masse, de préférence à raison de 0,01% à 0,3% en masse de la masse totale du matériau.

La matrice polymérique peut contenir en outre (c'est-à-dire outre le premier composé fluorescent et le deuxième composé fluorescent) un troisième composé fluorescent, généralement organique, choisi parmi les composés présentant un spectre d'absorption qui recouvre le spectre d'émission du deuxième composé fluorescent, et un spectre d'émission dont l'intensité maximale d'émission se situe entre 500 nm et 650 nm.

De préférence, le troisième composé fluorescent peut être choisi parmi le pérylène, le 4-butylamino-*N*-(2',5'-di-*t*-butylphényl)-1,8-naphtalimide, et tous les composés de la famille des coumarines présentant les caractéristiques d'absorption et d'émission précisées plus haut.

A titre d'exemples non-limitatifs, on peut citer les coumarines 1, 6, 30, 102, 151, 314, 343, et l'acridine jaune *« acridine yellow* ».

Avantageusement, le troisième composé fluorescent est incorporé à raison de 0,001% à 0,1% en masse, de préférence à raison de 0,002% à 0,05% en masse, par exemple à 0,005% en masse de la masse totale du matériau.

Un matériau particulièrement préféré selon l'invention peut comprendre un premier composé fluorescent, tel que le biphényle, à une concentration de 16,65% en masse de la masse du matériau, un deuxième composé fluorescent tel que le bis-méthylstyrylbenzène ou le 1,4-di[2(5-phenyloxazolyl)]benzène (POPOP), à une concentration de 0,01% à 0,3% en masse, de préférence de 0,1% en masse de la masse totale du matériau, et éventuellement un troisième composé fluorescent tel que le pérylène ou le 4-butylamino-*N*-(2',5'-di-*t*-butylphényl)-1,8-naphtalimide à une concentration de 0,002% à 0,05% en masse de la masse totale du matériau, de préférence de 0,005% en masse, dans une matrice polymérique constituée par un polymère de styrène à raison de 66,62% en masse de la masse totale du matériau et de diméthacrylate de 1,4-butanediyle, à raison de 16,65% en masse de la masse totale du matériau.

Si l'on souhaite que le matériau scintillateur selon l'invention permette également de détecter, en plus des neutrons rapides, les neutrons thermiques, et de discriminer les neutrons rapides des neutrons thermiques et du rayonnement gamma alors en outre au moins un composé boré tel que l'*ortho*-carborane peut être incorporé dans la matrice polymérique.

Ce composé boré peut être présent, par exemple, à une concentration massique de 1% à 10%, de préférence de 3,68% en masse de la masse totale du matériau.

L'invention concerne en outre un scintillateur plastique -ou détecteur à scintillation- préparé par mise en forme du matériau scintillateur plastique tel qu'il a été décrit plus haut ; ce matériau scintillateur plastique peut ne pas comprendre de composé boré tel que défini plus haut ou peut comprendre en outre éventuellement au moins un composé boré tel que l'ortho-carborane dans le cas précisé plus haut.

Selon l'invention, on peut, pour la première fois, avec le matériau scintillateur plastique selon l'invention, préparer des scintillateurs plastiques de grand volume, par exemple supérieur ou égal à 1 L, de préférence supérieur à 1 L, par exemple de 1 L à 2L, voire de 1L à 5L, ce qui n'était pas possible avec les matériaux scintillateurs de l'art antérieur.

L'invention concerne aussi un portique de détection comprenant le scintillateur selon l'invention.

L'invention a également trait à un procédé pour discriminer un signal dû aux neutrons rapides d'un signal dû aux rayons gamma dans un rayonnement comprenant des neutrons rapides et des rayons gamma émis par une source mixte, dans lequel on expose le scintillateur plastique selon l'invention audit rayonnement émis par la source mixte, et on sépare le signal dû aux neutrons rapides du signal dû aux rayons gamma par discrimination par forme d'impulsions (« *Pulse Shape Discrimination* » ou « *PSD* » en langue anglaise).

Cette « PSD » peut être réalisée par exemple soit par intégration de charges, soit par la technique dite du passage à zéro (« zero-crossing » en langue anglaise). Il existe d'autres sous-techniques pour réaliser cette PSD.

Dans ce procédé, le matériau scintillateur plastique ne comprend pas, généralement, de composé boré.

L'invention a trait enfin à un procédé pour discriminer les uns des autres un signal dû aux neutrons rapides, un signal dû aux neutrons thermiques, et un signal dû aux rayons gamma dans un rayonnement comprenant des neutrons rapides, des neutrons thermiques, et des rayons gamma émis par une source mixte, dans lequel on expose le scintillateur plastique selon l'invention audit rayonnement émis par la source mixte et on sépare le signal dû aux neutrons rapides, du signal dû aux neutrons thermiques, et du signal dû aux rayons gamma par discrimination par forme d'impulsions (« *Pulse Shape Discrimination* » ou « *PSD* » en langue anglaise).

Là-encore, cette « PSD » peut être réalisée par exemple soit par intégration de charges, soit par la technique dite du passage à zéro (« zero-crossing » en langue anglaise). Il existe d'autres sous-techniques pour réaliser cette PSD.

En d'autres termes, dans ce procédé, on discrimine le signal dû aux neutrons rapides du signal du aux neutrons thermiques; on discrimine le signal dû aux neutrons rapides du signal dû aux rayons gamma et on discrimine le signal dû aux neutrons thermiques du signal dû aux rayons gamma.

Dans ce dernier procédé, le matériau scintillateur plastique comprend, comme on l'a indiqué plus haut, un composé boré.

L'isotope 10 du bore va capturer le neutron et émettre un alpha de haute énergie, qui est ensuite facile à discriminer du bruit de fond gamma. Le composé boré n'est pas fluorescent mais c'est l'alpha généré qui va ioniser sur un chemin court le matériau et émettre une scintillation « spécifique ».

L'invention sera mieux comprise à la lecture de la description détaillé qui suit, notamment de modes de réalisation particuliers fournis sous la forme d'exemples. Cette description détaillée est faite en relation avec les dessins joints.

### BRÈVE DESCRIPTION DES DESSINS

- La Figure 1 est une photographie qui montre le scintillateur préparé dans l'exemple 1.
- La Figure 2 est un graphique qui représente le spectre de discrimination n/y obtenu lorsque le scintillateur préparé dans l'exemple 1 est mis en présence d'une source de Californium-252 placée à quelques centimètres du scintillateur sans blindage ajouté.

En abscisse est portée Qₜₒₜₐₗ (c'est-à-dire la charge totale de l'impulsion) (en picocoulomb, pC), et en ordonnée est portée Q_{retardée} (« Q_{delayed} » en anglais) (c'est-à-dire la partie retardée de l'intégration de l'impulsion (queue du signal)) (en pC).
- La Figure 3 est un graphique qui représente le spectre de discrimination n/y obtenu lorsque le scintillateur préparé dans l'exemple 2 est mis en présence d'une source de Californium-252 placée à quelques centimètres du scintillateur sans blindage ajouté.

En abscisse est portée Qₜₒₜₐₗ (c'est-à-dire la charge totale de l'impulsion) (en picocoulomb, pC), et en ordonnée est portée Q_{retardée} (« Q_{delayed} » en anglais) (c'est-à-dire la partie retardée de l'intégration de l'impulsion (queue du signal)) (en pC).
- La Figure 4 est un graphique qui représente le spectre de discrimination n/γ obtenu lorsque le scintillateur préparé dans l'exemple 3 est mis en présence d'une source de Californium-252 placée à quelques centimètres du scintillateur sans blindage ajouté.

En abscisse est portée Qₜₒₜₐₗ (c'est-à-dire la charge totale de l'impulsion) (en picocoulomb, pC), et en ordonnée est portée Q_{retardée} (« Q_{delayed} » en anglais) (c'est-à-dire la partie retardée de l'intégration de l'impulsion (queue du signal)) (en pC).

### EXPOSÉ DÉTAILLÉ DE MODES DE RÉALISATION PARTICULIERS

Le matériau selon l'invention comprend une matrice polymérique constituée par un polymère réticulé susceptible d'être préparé par polymérisation d'un mélange comprenant au moins un monomère aromatique et un monomère jouant le rôle d'agent de réticulation et non plus comme dans l'art antérieur, une matrice polymérique constituée par un homopolymère tel que le polystyrène ou le polyvinyltoluène.

Comme on l'a déjà indiqué plus haut, la réticulation confère au polymère des propriétés de transparence, de solidité et de rigidité.

Dans la matrice polymérique est incorporée au moins une molécule ou composé fluorescent, généralement organique.

Ainsi, dans la matrice polymérique pourra être incorporée :
- une première molécule fluorescente, généralement organique, dont les propriétés spectrales présentent différentes caractéristiques.
- éventuellement une deuxième molécule fluorescente, généralement organique, dont les propriétés spectrales présentent différentes caractéristiques.
- si l'application visée le nécessite, éventuellement une troisième molécule fluorescente, généralement organique, dont les propriétés spectrales présentent différentes caractéristiques.

### Matrice polymérique.

Lors de l'interaction entre un rayonnement quel qu'il soit, et la matière, celle-ci doit être capable de transférer convenablement l'énergie déposée.

Dans le cas d'un matériau scintillateur plastique, la matière n'est autre que la matrice polymérique.

Concrètement, le polymère de la matrice polymérique du matériau selon l'invention possède un grand nombre de groupements aromatiques qui vont être ionisés après interaction rayonnement matière.

Sur le parcours de l'ion, les différentes molécules vont être ionisées puis des recombinaisons auront lieu donnant elles-mêmes suite à des désexcitations. La désexcitation va se produire radiativement par émission d'un photon de fluorescence.

Pour cela, le polymère va présenter majoritairement des motifs dérivés de la polymérisation d'un monomère aromatique.

Comme on l'a déjà précisé plus haut, par monomère aromatique on entend généralement, dans la présente, un monomère comprenant au moins un cycle aromatique. Ce ou ces cycle(s) aromatique(s) peut(peuvent) être choisi(s) parmi les cycles carbonés aromatiques, ou les cycles hétéro-aromatiques, chacun de ces cycles peut comprendre de 3 à 10 atomes, par exemple de 6 à 8 atomes. Le ou les hétéro-atome(s) peut(peuvent) être choisi(s) parmi N, O, P ou S. Le monomère aromatique peut par exemple être choisi parmi les monomères comprenant un cycle benzénique, un groupement naphtyle ou un cycle carbazole. Le ou les cycle(s) aromatique(s) peut(peuvent) être en outre substitué(s) par un ou plusieurs groupement(s) choisi(s) parmi les groupes alkyle.

Selon l'invention, ce monomère comprend en outre un groupe polymérisable.

Ledit groupe polymérisable est généralement choisi parmi les groupes comprenant une double liaison carbone-carbone éthyléniquement insaturée tel que le groupe vinyle.

De préférence, le monomère aromatique peut être choisi parmi le styrène ; les styrènes substitués par un ou plusieurs groupes alkyle tel que le *t*-butylstyrène et ses isomères, le vinyltoluène et ses isomères, et le vinylxylène et ses isomères; le vinylnaphtalène éventuellement substitué par un ou plusieurs groupes alkyle; le *N-*vinylcarbazole ; et leurs mélanges.

Lorsque le polymère est préparé à partir d'un seul monomère aromatique, et de l'agent de réticulation, on pourra parler alors d'un polymère réticulé par l'agent de réticulation.

Lorsque le polymère est préparé à partir de plusieurs monomères aromatiques différents, et de l'agent de réticulation, on pourra parler alors d'un copolymère réticulé par l'agent de réticulation.

La réticulation est réalisée au moyen de molécules pouvant présenter au minimum deux doubles liaisons polymérisables.

Selon l'invention, de très bons résultats sont observés lorsque la réticulation est réalisée en utilisant en tant qu'agent de réticulation des diacrylates d'alkyle répondant à la formule générale (I) suivante ou des diméthacrylates d'alkyle répondant à la formule générale (II) suivante : 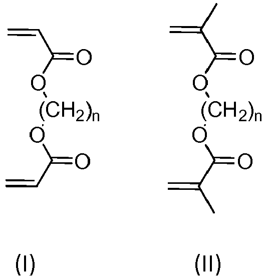 où n est un nombre entier généralement de 1 à 20, de préférence de 2 à 6. n peut prendre toutes les valeurs entre 1 et 20, par exemple 1, 2, 3, 4, 5 ou 6.

De préférence, c'est le diméthacrylate de 1,4-butanediyle qui est utilisé.

Il a été mis en évidence, de manière surprenante, selon l'invention, que toutes les fractions molaires entre monomère aromatique et agent de réticulation ne convenaient pas pour obtenir notamment les propriétés recherchées de transparence, stabilité et potentiel de discrimination.

Une plage de 10% à 50% en moles d'agent de réticulation dans le mélange de polymérisation et une plage de 90% à 50% de monomère aromatique conviennent particulièrement pour préparer les matériaux scintillateurs selon l'invention.

De préférence, le pourcentage d'agent de réticulation utilisé est compris entre 15% et 20% en moles du mélange de polymérisation. Dans cette plage, les propriétés recherchées de transparence, stabilité, et potentiel de discrimination sont encore renforcées.

La matrice polymérique doit être la plus transparente possible à la longueur d'onde d'émission du ou des fluorophore(s) incorporé(s) ; typiquement le scintillateur doit être transparent à des longueurs d'onde supérieures à 400 nm.

Un gain de transparence est obtenu grâce à l'utilisation des diacrylates d'alkyle et encore plus des diméthacrylates d'alkyle qui sont connus pour être transparents dans le proche UV.

Parmi ces diacrylates et diméthacrylates, le diméthacrylate de 1,4-butanediyle est utilisé de préférence en raison de son coefficient de retrait qui est le plus faible parmi tous les composés qui ont pu être testés.

A titre d'exemple, la densité observée du matériau selon l'invention, tel que le matériau de l'exemple 1 vaut 1,08.

Le polymère réticulé ou copolymère réticulé du matériau selon l'invention peut être préparé par tout procédé de polymérisation connu de l'homme du métier.

Cependant, afin que le polymère présente le minimum d'impuretés, la polymérisation est conduite de préférence par initiation thermique.

Il n'est pas nécessaire d'ajouter un amorceur de radicaux connu de l'homme du métier tel que l'AIBN ou le peroxyde de benzoyle.

Si toutefois la polymérisation atteint difficilement son terme, il est alors possible, dans ce cas, d'utiliser un amorceur de radicaux choisi par exemple parmi les deux amorceurs de radicaux précités, à une concentration massique comprise généralement entre 0,01% et 1% de la masse totale du matériau.

### Première molécule fluorescente

La première molécule fluorescente, généralement organique, peut être choisie de sorte à présenter un spectre d'absorption, dont l'intensité maximale d'absorption est située entre 250 et 350 nm, par exemple cette intensité maximale d'absorption peut être centrée sur 300 nm.

Une fois excitée, cette molécule est ensuite capable d'émettre des photons dont la longueur d'onde correspondante est située entre 340 et 400 nm, par exemple, dont l'intensité maximale d'émission peut être centrée sur 360 nm.

En outre, la première molécule fluorescente, puisqu'elle est généralement incorporée dans la matrice à une teneur en masse élevée, doit avantageusement présenter une constante de solubilité dans les solvants apolaires, élevée.

En termes de concentration massique, une concentration massique d'au moins 10% en masse en cette première molécule fluorescente par rapport à la masse totale du matériau, est généralement utilisée pour que le matériau scintillateur possède des capacités de discrimination n/y satisfaisantes.

Avantageusement, des taux d'incorporation compris entre 10% et 30% en masse de la masse totale du matériau peuvent être utilisés. Typiquement, un matériau scintillateur composé d'une matrice polymérique et d'une première molécule fluorescente ou composé fluorescent à 16,65% en en masse de la masse totale du matériau, constitue un exemple d'un matériau scintillateur selon l'invention.

Dans le cadre de l'invention et après de nombreux tests réalisés, il s'est avéré que le biphényle présente toutes les caractéristiques précitées.

### Deuxième molécule fluorescente

Outre la première molécule fluorescente, une deuxième molécule fluorescente, généralement organique, peut être incorporée dans la matrice polymérique.

La deuxième molécule fluorescente éventuelle peut être choisie de sorte à présenter un spectre d'absorption apte à recouvrir le spectre d'émission de la première molécule fluorescente, notamment, pour optimiser les transferts énergétiques entre les deux molécules fluorescentes, ce qui signifie, en d'autres termes, que la deuxième molécule fluorescente est apte, d'une part, à absorber les photons de longueurs d'onde appartenant au spectre d'émission de ladite première molécule fluorescente, et d'autre part, suite à cette absorption, à émettre des photons, de telle sorte que le spectre d'émission de ladite deuxième molécule fluorescente s'échelonne de 350 à 650 nm avec une intensité maximale d'émission comprise entre 400 et 600 nm.

La teneur à laquelle la deuxième molécule fluorescente est incorporée dans la matrice polymérique est beaucoup plus réduite que celle de la première molécule fluorescente.

Typiquement, on utilise une concentration en deuxième molécule fluorescente comprise entre 0,01% et 1% en masse de la masse totale du matériau, de préférence de 0,01% à 0,3% en masse de la masse totale du matériau.

Le deuxième composé fluorescent peut être choisi par exemple parmi les composés déjà cités plus haut tels que bis-méthylstyrylbenzène (bis-MSB) ou le POPOP, le POPOP étant préféré au bis-MSB.

### Troisième molécule fluorescente

Outre la première molécule fluorescente et la deuxième molécule fluorescente, une troisième molécule fluorescente, généralement organique, peut être incorporée dans la matrice polymérique.

Cette troisième molécule fluorescente peut être choisie de manière à présenter un spectre d'absorption apte à recouvrir le spectre d'émission de la deuxième molécule fluorescente, notamment, pour optimiser les transferts énergétiques entre les deux molécules fluorescentes (c'est-à-dire la deuxième et la troisième molécules fluorescentes) et améliorer l'efficacité intrinsèque du détecteur à scintillation.

Ce qui signifie, en d'autres termes, que la troisième molécule fluorescente est apte à absorber les photons de longueurs d'onde appartenant au spectre d'émission de ladite deuxième molécule fluorescente, ladite troisième molécule fluorescente étant apte, suite à cette absorption, à émettre des photons, de telle manière que le spectre d'émission de ladite troisième molécule fluorescente présente une intensité maximale d'émission comprise entre 500 et 600 nm.

La teneur à laquelle la troisième molécule fluorescente est incorporée dans la matrice polymérique est beaucoup plus réduite que celle de la première molécule fluorescente.

Typiquement, on utilise une concentration en troisième molécule fluorescente de 0,001% à 0,1% en masse de la masse de la masse totale du matériau, de préférence de 0,002% à 0,05% en masse, par exemple à 0,005% en masse de la masse totale du matériau.

Le troisième composé fluorescent peut être choisi parmi les composés déjà cités plus haut, tels que le pérylène et le 4-butylamino-*N*-(2',5'-di-*t*-butylphényl)-1,8-naphtalimide, le pérylène étant préféré. Dans un mode de réalisation, le matériau scintillateur selon l'invention peut également permettre de détecter, en plus des neutrons rapides, les neutrons thermiques par capture de ceux-ci avec du bore.

Dans ce mode de réalisation, la composition du matériau scintillateur plastique permettant de discriminer les neutrons rapides et thermiques du rayonnement gamma est telle qu'elle a déjà été décrite plus haut, mais elle comprend en outre au moins une molécule borée, différente des molécules fluorescentes, telle que l'*ortho-*carborane.

Cette molécule borée peut être présente à une concentration massique de 1% à 10%, de préférence de 3,68% en masse de la masse totale du matériau.

A titre d'exemple non limitatif, un matériau scintillateur selon l'invention et présentant des propriétés de discrimination entre les neutrons rapides et les rayons gamma peut comprendre une première molécule, un premier composé fluorescent du type biphényle, à la concentration d'environ 10% à 30 % en masse de la masse totale du matériau, de préférence de 16,65% en masse de la masse totale du matériau, une deuxième molécule fluorescente du type mentionné ci-dessus comme le bis-méthylstyrylbenzène (bis-MSB) ou POPOP (le POPOP étant préféré au bis-MSB), à une concentration en masse comprise entre 0,01% et 0,3%, préférentiellement 0,1% de la masse totale du matériau, et éventuellement, si nécessaire une troisième molécule fluorescente comme le pérylène ou le 4-butylamino-*N*-(2',5'-di-*t*-butylphényl)-1,8-naphtalimide (le pérylène étant préféré), à une concentration comprise entre 0,002% et 0,05% en masse de la masse du matériau, de préférence de 0,005% en masse de la masse du matériau, le tout dans une matrice copolymérique composée d'un mélange de styrène à 66,62% en masse de la masse totale du matériau, et de diméthacrylate de 1,4-butanediyle à 16,65% en masse de la masse du matériau .

A partir du matériau scintillateur selon l'invention, on prépare un scintillateur -ou détecteur à scintillation- en mettant en forme le matériau scintillateur plastique que l'on vient de décrire.

La mise en forme peut être effectuée lors de la préparation du matériau par exemple en préparant un mélange liquide du monomère aromatique, de l'agent de réticulation (le monomère aromatique et l'agent de réticulation ayant au préalable été purifiés convenablement pour retirer leurs inhibiteurs de radicaux), du ou des composé(s) fluorescent(s), et éventuellement du composé boré, puis en versant ce mélange dans un moule à la forme du scintillateur souhaité. On procède ensuite à la polymérisation dans le moule, généralement en chauffant le mélange. Après refroidissement, on démoule le scintillateur ainsi obtenu.

Le scintillateur est ensuite généralement rectifié, par exemple au tour, puis au moins l'une de ses surfaces est polie afin d'obtenir un état de surface compatible avec les applications recherchées.

Le scintillateur selon l'invention peut avoir une forme quelconque. Généralement, il a la forme d'un cylindre droit à section circulaire.

On a déjà vu que, pour la première fois, on peut avec le matériau scintillateur plastique selon l'invention du fait notamment que la matrice est réticulée, préparer des scintillateurs plastiques de grand volume, par exemple supérieur à 1 L, de préférence de 1 L à 2 L, voire de 1 L à 5 L, ce qui n'était pas possible avec les matériaux scintillateurs de l'art antérieur.

Ainsi les scintillateurs selon l'invention peuvent se présenter sous la forme de cylindres d'une hauteur de 17 cm et d'un diamètre de 12 cm alors que les scintillateurs de l'art antérieur se présentent généralement sous la forme de cylindres d'une hauteur de 8 cm et d'un diamètre de 8 cm.

Ces scintillateurs, même de grand volume, sont d'un coût réduit et possèdent toutes les propriétés avantageuses inhérentes au matériau selon l'invention, telles qu'elles ont été énumérées plus haut. En particulier, un tel scintillateur est extrêmement stable et peut être conservé pendant des années sans précautions particulières sans subir de vieillissement et de dégradations de ses propriétés notamment de discrimination.

Le scintillateur selon l'invention peut notamment être intégré dans un portique de détection.

Les applications visées pour les scintillateurs selon l'invention comprennent notamment la détection du flux de neutrons en éliminant le bruit de fond notamment dû aux rayons gamma accompagnant nécessairement les émissions de neutrons.

Lorsqu'un rayon gamma interagit avec un milieu organique, il ionise directement le scintillateur et un signal électrique est enregistré né d'une composante dite rapide de fluorescence.

Lorsqu'un neutron interagit avec un milieu organique, il transfert son énergie à des protons dits de recul qui ionisent ensuite le scintillateur et un signal électrique est enregistré né d'une composante dite lente de fluorescence.

C'est donc par discrimination par forme d'impulsion (« *pulse shape discrimination* » ou PSD) que la séparation des signaux est réalisée, plus particulièrement ici par comparaison de la composante lente des signaux attribués aux gamma ou aux neutrons, le signal gamma présentant généralement une composante lente plus faible temporellement que le signal neutron.

Le système, outre le scintillateur, comprend un photomultiplicateur (PM), qui doit être adapté à la longueur d'émission du scintillateur organique. Le système, une fois sous haute tension est isolé de la lumière pour minimiser le bruit de fond. Le signal en sortie du photomultiplicateur est ensuite traité dans une chaîne électronique adaptée incluant notamment un QDC (« *Charge to Digital Converter* ») permettant l'intégration de charges et la séparation des signaux.

L'invention va maintenant être décrite en référence aux exemples suivants, donnés à titre illustratif et non limitatif.

### Exemples :

### Exemple 1.

Dans cet exemple, on prépare un scintillateur plastique selon l'invention.

Du styrène pur (66,62% en masse du mélange 1268 g), du diméthacrylate de 1,4-butanediyle pur (16,65% en masse du mélange, 317 g), du biphényle (16,65% en masse du mélange, 317 g) et du POPOP (0,08% en masse du mélange, 1,37 g) sont mélangés sous atmosphère inerte dans un flacon sec.

Le mélange est débarrassé de tout gaz par la méthode du dégazage à froid sous vide (correspondant à la terminologie anglaise « *freeze-pump-thaw* »), puis il est versé avec précaution dans un moule en verre élaboré pour donner la forme finale du scintillateur plastique à obtenir.

Typiquement, le moule en verre utilisé dans le cadre de cet exemple est une bouteille en verre cylindrique d'une contenance de 2,5 L.

Le mélange placé dans le moule est chauffé à 50°C pendant 7 à 14 jours.

Le produit obtenu est ensuite démoulé, rectifié au tour puis poli sur un de ses deux plus grand côtés jusqu'à obtenir un état de surface optiquement compatible avec les applications recherchées.

Le scintillateur plastique ainsi préparé se révèle être stable et peut être conservé sans précaution particulière pendant plusieurs années.

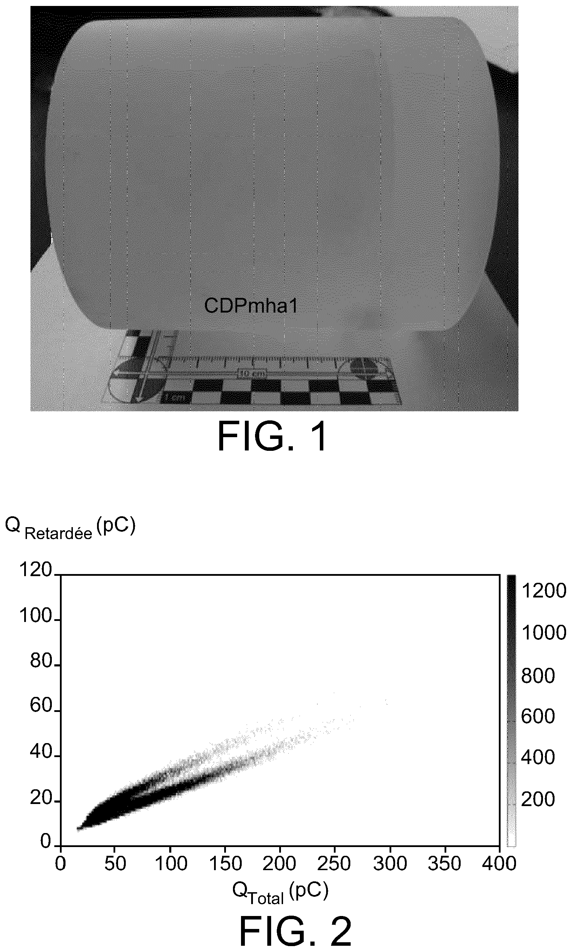

Une photographie de ce scintillateur est présentée sur la Figure 1.

Ce scintillateur plastique est ensuite intégré dans un montage expérimental afin de montrer qu'il permet d'obtenir une discrimination des signaux dus aux rayons gamma des signaux dus aux neutrons émis par une source mixte.

Le montage expérimental mis en place comprend une source mixte neutrons et gamma, à savoir source de Californium-252 (²⁵²Cf, d'activité proche de 1 MBq) le scintillateur, et un photomultiplicateur (PM).

Le photomultiplicateur est adapté à la longueur d'onde d'émission du scintillateur organique.

Le système, une fois sous haute tension est isolé de la lumière pour minimiser le bruit de fond.

Le signal en sortie du photomultiplicateur est ensuite traité dans une chaîne électronique adaptée incluant notamment un « *QDC* » (« *Charge to Digital Converter* » en langue anglaise) permettant l'intégration de charges et la séparation des signaux.

C'est par discrimination par forme d'impulsion (« *Pulse Shape Discrimination* » ou PSD en langue anglaise) que la séparation des signaux est réalisée, plus particulièrement ici par intégration de charge, par comparaison de la composante lente des signaux attribués aux gamma ou aux neutrons, le signal gamma présentant généralement une composante lente plus faible temporellement que le signal neutron. Nous ajustons précisément les portes temporelles d'intégration permettant la séparation de ces deux composantes comme cela est présenté sur la figure 2.

Une première porte temporelle permet d'intégrer le signal dans son intégralité (charge totale), alors qu'une deuxième porte temporelle permet de ne se préoccuper que de la partie du signal où le signal gamma va se différencier du signal neutron : la partie retardée du signal. Ainsi, cette deuxième porte permet d'intégrer la charge lente des signaux.

La Figure 2 représente donc le spectre de discrimination n/γ obtenu lorsque le scintillateur préparé comme cela a été décrit plus haut, est mis en présence d'une source de Californium-252 (²⁵²Cf, d'activité proche de 1 MBq), placée à quelques centimètres du scintillateur sans blindage ajouté .

Sur cette figure, on peut visualiser deux lobes, dont chacun d'entre eux représente soit la contribution des signaux gamma (lobe le plus bas), soit la contribution des signaux neutroniques (lobe le plus haut). En-dessous de 50 pC de charge totale, les deux lobes se rejoignent ce qui définit les limites en énergie de la discrimination du scintillateur. Par contre, au-dessus de 50 pC, les deux lobes sont clairement séparés, ce qui permet clairement d'affirmer que la discrimination entre neutrons rapides et gamma est possible.

### Exemple 2.

Dans cet exemple, on prépare un scintillateur plastique selon l'invention.

Du styrène pur (66,62% en masse du mélange 16,308 g), du diméthacrylate de 1,4-butanediyle pur (16,65% en masse du mélange, 4,077 g), du biphényle (16,65% en masse du mélange, 4,077 g), du POPOP (0,08% en masse du mélange, 20,4 mg) et du pérylène (0,004% en masse du mélange, 1,0 mg) sont mélangés sous atmosphère inerte dans un flacon sec.

Le mélange est débarrassé de tout gaz par la méthode du dégazage à froid sous vide (correspondant à la terminologie anglaise « *freeze-pump-thaw* »), puis il est versé avec précaution dans un moule en verre élaboré pour donner la forme finale du scintillateur plastique à obtenir.

Typiquement, le moule en verre utilisé dans le cadre de cet exemple est une bouteille en verre cylindrique d'une contenance de 50 mL.

Le mélange placé dans le moule est chauffé à 60°C pendant 7 à 14 jours.

Le produit obtenu est ensuite démoulé, rectifié au tour puis poli sur un de ses deux plus grand côtés jusqu'à obtenir un état de surface optiquement compatible avec les applications recherchées.

Le scintillateur plastique ainsi préparé se révèle être stable et peut être conservé sans précaution particulière pendant plusieurs années.

Ce scintillateur plastique est ensuite intégré dans un montage expérimental afin de montrer qu'il permet d'obtenir une discrimination des signaux dus aux rayons gamma des signaux dus aux neutrons émis par une source mixte.

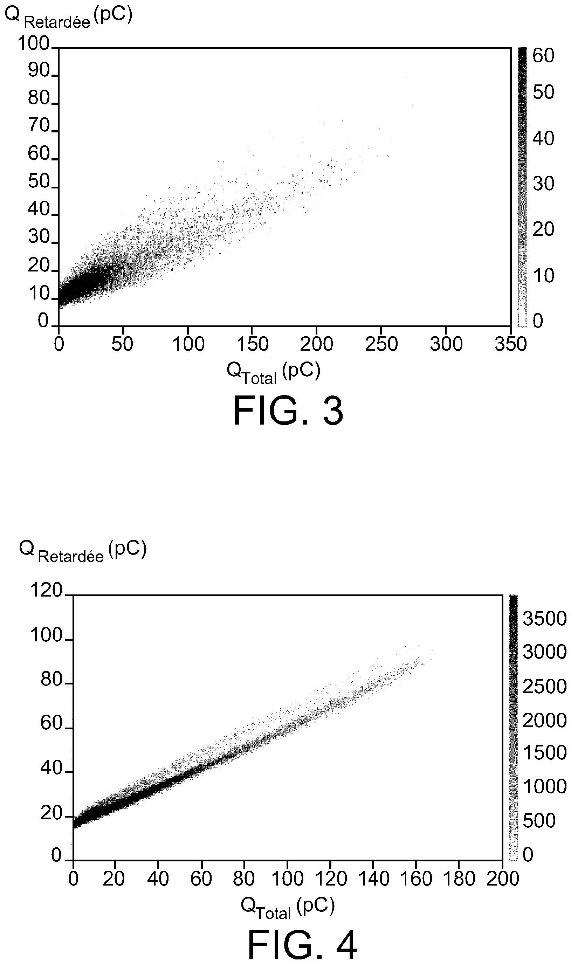

Le montage expérimental mis en place comprend une source mixte neutrons et gamma, à savoir source de Californium-252 (²⁵²Cf, d'activité proche de 1 MBq) le scintillateur, et un photomultiplicateur (PM). La figure de discrimination est présentée sur la Figure 3.

### Exemple 3.

Dans cet exemple, on prépare un scintillateur plastique selon l'invention.

Du styrène pur (62,07% en masse du mélange 7,248 g), du diméthacrylate de 1,4-butanediyle pur (15,60% en masse du mélange, 1,822 g), du biphényle (15,60% en masse du mélange, 1,822 g), du *p*-terphényle (3,00% en masse du mélange, 350 mg), du POPOP (0,04% en masse du mélange, 5 mg) et de l'*o*-carborane (3,68% en masse du mélange, 430 mg) sont mélangés sous atmosphère inerte dans un flacon sec.

Le mélange est débarrassé de tout gaz par la méthode du dégazage à froid sous vide (correspondant à la terminologie anglaise « *freeze-pump-thaw* »), puis il est versé avec précaution dans un moule en verre élaboré pour donner la forme finale du scintillateur plastique à obtenir.

Typiquement, le moule en verre utilisé dans le cadre de cet exemple est une bouteille en verre cylindrique d'une contenance de 50 mL.

Le mélange placé dans le moule est chauffé entre 60°C et 90°C pendant 7 à 14 jours.

Le produit obtenu est ensuite démoulé, rectifié au tour puis poli sur un de ses deux plus grand côtés jusqu'à obtenir un état de surface optiquement compatible avec les applications recherchées.

Le scintillateur plastique ainsi préparé se révèle être stable et peut être conservé sans précaution particulière pendant plusieurs années.

Ce scintillateur plastique est ensuite intégré dans un montage expérimental afin de montrer qu'il permet d'obtenir une discrimination des signaux dus aux rayons gamma des signaux dus aux neutrons émis par une source mixte.

Le montage expérimental mis en place comprend une source mixte neutrons et gamma, à savoir source de Californium-252 (²⁵²Cf, d'activité proche de 1 MBq), le scintillateur, avec un barreau de polyéthylène haute densité (5 cm) d'épaisseur entre la source et le scintillateur et un photomultiplicateur (PM). La figure de discrimination est présentée sur la Figure 4.

Le flux de neutrons thermiques est présent dans la partie basse, en terme de charge totale en abscisse, dissimulé dans le lobe neutrons rapides, lobe supérieur sur la Figure 4.

Pour être mis en évidence de manière plus probante, la méthode de discrimination appelée « *zero crossing method* » serait plus appropriée, un exemple est présenté dans la publication de Normand [9] où le scintillateur plastique est dopé au bore dans les mêmes proportions que le scintillateur plastique tel que décrit dans cet exemple.

### REFERENCES

[1] Peerani, P.; Tomanin, A.; Pozzi, S.; Dolan, J.; Miller, E.; Flaska, M.; Battaglieri, M.; De Vita, R.; Ficini, L.; Ottonello, G.; Ricco, G.; Dermody, G.; Giles, C., Nucl. Instr. and Meth. A 2012, 696, 110-120.
[2] Knoll, G. F. Radiation Detection and Measurement (Third Edition); Wiley, 2010.
[3] Kouzes, R. T.; Ely, J. R.; Lintereur, A. T.; Stephens, D. L. PNNL Reports, 2009, PNNL-18903.
[4] Brooks, F. D.; Pringle, R. W.; Funt, B. L., IRE Trans. Nuc. Sci. 1960, NS-7, 35-38.
[5] Iwanowska, J.; Swiderski, L.; Moszynski, M.; Szczesniak, T.; Sibczynski, P.; Galunov, N. Z.; Karavaeva, N. L., JINST 2011, 6, P07007.
[6] (a) Zaitseva, N.; Carman, L.; Glenn, A.; Hamel, S.; Payne, S. A.; Rupert, B. L. 2012, WO-2012142365. (b) Zaitseva, N.; Rupert, B. L.; Pawelczak, I.; Glenn, A.; Martinez, H. P.; Carman, L.; Faust, M.; Cherepy, N.; Payne, S., Nucl. Instr. and Meth. A 2012, 668, 88-93.
[7] (a) Doty, F. P.; Allendorf, M. D.; Feng, P. L., 2011, WO-2011/060085. (b) Feng, P. L.; Villone, J.; Hattar, K.; Mrowka, S.; Wong, B. M.; Allendorf, M. D.; Doty, F. P., IEEE Trans. Nuc. Sci. 2012, 59, 3312-3319.
[8] Simonetti, J. J.; Ziegler, W. P.; Durner Jr., E. F.; Busser, C. D. M., Demande de brevet FR-A-2 844 885 (2003).
[9] Normand, S.; Mouanda, B.; Haan, S.; Louvel, M., Nucl. Instr. and Meth. A 2002, 484, 342-350.

## Revendications

1. Matériau scintillateur plastique comprenant une matrice polymérique dans laquelle est incorporé au moins un composé fluorescent à une concentration en masse supérieure ou égale à 10% en masse de la masse totale du matériau, dans lequel la matrice polymérique est constituée par un polymère réticulé susceptible d'être obtenu par polymérisation d'un mélange comprenant au moins un monomère aromatique et au moins un monomère jouant le rôle d'agent de réticulation choisi parmi les diacrylates d'alkyle, les diméthacrylates d'alkyle, et leurs mélanges, les proportions en moles du monomère jouant le rôle d'agent de réticulation et du monomère aromatique dans le mélange étant respectivement de 10% à 50% et de 90% à 50% ; de préférence les proportions en moles de l'agent de réticulation et du monomère aromatique dans le mélange sont respectivement de 15% à 20% et de 85% à 80%.

2. Matériau selon la revendication 1, dans lequel le monomère aromatique est choisi parmi le styrène ; les styrènes substitués par un ou plusieurs groupe(s) alkyle tel(s) que le *t*-butytstyrène et ses isomères, le vinyltoluène et ses isomères, et le vinylxylène et ses isomères; le vinylnaphtalène éventuellement substitué par un ou plusieurs groupe(s) alkyle ; le *N*-vinylcarbazole ; et leurs mélanges.

3. Matériau selon l'une quelconque des revendications précédentes, dans lequel le monomère jouant le rôle d'agent de réticulation est le diméthacrylate de 1,4-butanediyle.

4. Matériau selon l'une quelconque des revendications précédentes, dans lequel la matrice polymérique contient en tant que composé fluorescent, un premier composé fluorescent, choisi parmi les composés présentant un spectre d'absorption dont l'intensité maximale d'absorption se situe entre 250 nm et 350 nm, par exemple est de 300 nm , et un spectre d'émission qui se situe entre 340 nm et 400 nm ; de préférence le premier composé fluorescent est le biphényle.

5. Matériau selon la revendication 4, dans lequel le premier composé fluorescent est incorporé à raison de 10% à 30% en masse, par exemple à raison de 16,65% en masse, de la masse totale du matériau.

6. Matériau selon l'une quelconque des revendications 4 à 5, dans lequel la matrice polymérique contient en outre un deuxième composé fluorescent choisi parmi les composés présentant un spectre d'absorption qui recouvre le spectre d'émission du premier composé fluorescent, et un spectre d'émission qui se situe entre 350 nm et 650 nm, avec une intensité maximale d'émission entre 400 et 600 nm ; de préférence le deuxième composé fluorescent est choisi parmi le bis-méthystyrylbenzène (bis-MSB), le 1,4-di-[2-(5-phényloxazolyl)]benzène (POPOP), le 9,10-diphénylanthracène, le 4-éthoxy-*N-*(2',5'-di-*t*-butylphényl)-1,8-naphtalimide, et la 3-hydroxyflavone.

7. Matériau selon la revendication 6, dans lequel le deuxième composé fluorescent est incorporé à raison de 0,01% à 1% en masse, de préférence à raison de 0,01% à 0,3% en masse de la masse totale du matériau.

8. Matériau selon l'une quelconque des revendications 4 à 7, dans lequel la matrice polymérique contient en outre un troisième composé fluorescent choisi parmi les composés présentant un spectre d'absorption qui recouvre le spectre d'émission du deuxième composé fluorescent, et un spectre d'émission dont l'intensité maximale d'émission se situe entre 500 nm et 650 nm ; de préférence le troisième composé fluorescent est choisi parmi le pérylène, le 4-butylamino-*N*-(2',5'-di-*t*-butylphényl)-1,8-naphtalimide, et les composés de la famille des coumarines, par exemple les coumarines 1, 6, 30, 102, 151, 314, 343 et l'acridine jaune *« acridine yellow* ».

9. Matériau selon la revendication 8, dans lequel le troisième composé fluorescent est incorporé à raison de 0,001% à 0,1% en masse, de préférence à raison de 0,002% à 0,05% en masse de la masse totale du matériau.

10. Matériau selon la revendication 1, comprenant un premier composé fluorescent, tel que le biphényle, à une concentration de 16,65% en masse de la masse totale du matériau, un deuxième composé fluorescent tel que le bis-méthylstyrylbenzène ou le 1,4-di[2(5-phenyloxazolyl)]benzène (POPOP), à une concentration de 0,01% à 0,3% en masse, de préférence de 0,1% en masse de la masse totale du matériau, et éventuellement un troisième composé fluorescent tel que le pérylène ou le 4-butylamino-*N*-(2',5'-di-*t*-butylphényl)-1,8-naphtalimide à une concentration de 0,002% à 0,05% en masse de la masse totale du matériau, de préférence de 0,005% en masse de la masse totale du matériau, dans une matrice polymérique constituée par un polymère de styrène à raison de 66,62% en masse de la masse totale du matériau et de diméthacrylate de 1,4-butanediyle, à raison de 16,65% en masse de la masse totale du matériau.

11. Matériau selon l'une quelconque des revendications précédentes, dans lequel, en outre, au moins un composé boré tel que l'*ortho*-carborane est incorporé dans la matrice polymérique, par exemple à une concentration massique de 1% à 10%, de préférence de 3,68% en masse de la masse totale du matériau.

12. Scintillateur plastique préparé par mise en forme du matériau selon l'une quelconque des revendications 1 à 10.

13. Scintillateur plastique préparé par mise en forme du matériau selon la revendication 11.

14. Scintillateur plastique selon la revendication 12 ou 13, dans lequel le scintillateur a un volume supérieur à 1 L, par exemple de 1 L à 2 L, voire de 1 L à 5 L.

15. Portique de détection comprenant le scintillateur plastique selon l'une quelconque des revendications 12 à 14.

16. Procédé pour discriminer un signal dû aux neutrons rapides d'un signal dû aux rayons gamma dans un rayonnement comprenant des neutrons rapides et des rayons gamma émis par une source mixte, dans lequel on expose le scintillateur plastique selon la revendication 12, audit rayonnement émis par la source mixte, et on sépare le signal dû aux neutrons rapides du signal dû aux rayons gamma par discrimination par forme d'impulsions (« *Pulse Charge* Discrimination » ou « *PSD* » en langue anglaise).

17. Procédé pour discriminer les uns des autres un signal dû aux neutrons rapides, un signal dû aux neutrons thermiques, et un signal dû aux rayons gamma dans un rayonnement comprenant des neutrons rapides, des neutrons thermiques, et des rayons gamma émis par une source mixte, dans lequel on expose le scintillateur plastique selon la revendication 13, audit rayonnement émis par la source mixte et on sépare le signal dû aux neutrons rapides, du signal dû aux neutrons thermiques, et du signal dû aux rayons gamma par discrimination par forme d'impulsions (« *Pulse Shape Discrimination* » ou « *PSD* » en langue anglaise).

## Patentansprüche

1. Kunststoff-Szintillatormaterial, enthaltend eine Polymermatrix, in die zumindest eine fluoreszierende Verbindung in einer Massenkonzentration höher oder gleich 10 Masse-%, bezogen auf die Gesamtmasse des Materials, eingearbeitet ist, wobei die Polymermatrix aus einem vernetzten Polymer besteht, das durch Polymerisation eines Gemischs erhalten werden kann, das zumindest ein aromatisches Monomer und zumindest ein Monomer umfasst, das als Vernetzungsmittel fungiert, ausgewählt aus Alkyldiacrylaten, Alkyldimethacrylaten und deren Gemischen, wobei die molaren Anteile des als Vernetzungsmittel fungierenden Monomers und des aromatischen Monomers in dem Gemisch jeweils 10 % bis 50 % bzw. 90 % bis 50 % betragen, wobei vorzugsweise die molaren Anteile des Vernetzungsmittels und des aromatischen Monomers in dem Gemisch jeweils 15 % bis 20 % bzw. 85 % bis 80 % betragen.

2. Material nach Anspruch 1, wobei das aromatische Monomer ausgewählt ist aus Styrol; Styrolen, die mit einer oder mehreren Alkylgruppen substituiert sind, wie *t*-Butylstyrol und seinen Isomeren, Vinyltoluol und seinen Isomeren und Vinylxylen und seinen Isomeren; Vinylnaphthalin, das gegebenenfalls mit einer oder mehreren Alkylgruppen substituiert ist; *N*-Vinylcarbazol; und deren Gemischen.

3. Material nach einem der vorhergehenden Ansprüche, wobei das als Vernetzungsmittel fungierende Monomer 1,4-Butandiyldimethacrylat ist.

4. Material nach einem der vorhergehenden Ansprüche, wobei die Polymermatrix als fluoreszierende Verbindung eine erste fluoreszierende Verbindung enthält, die ausgewählt ist aus Verbindungen mit einem Absorptionsspektrum, dessen maximale Absorptionsintensität zwischen 250 nm und 350 nm liegt, beispielsweise bei 300 nm, und mit einem Emissionsspektrum, das zwischen 340 nm und 400 nm liegt; wobei vorzugsweise die erste fluoreszierende Verbindung Biphenyl ist.

5. Material nach Anspruch 4, wobei die erste fluoreszierende Verbindung in einer Menge von 10 bis 30 Masse-%, beispielsweise in einer Menge von 16,65 Masse-%, bezogen auf die Gesamtmasse des Materials, eingearbeitet ist.

6. Material nach einem der Ansprüche 4 bis 5, wobei die Polymermatrix ferner eine zweite fluoreszierende Verbindung enthält, die ausgewählt ist aus Verbindungen mit einem Absorptionsspektrum, das das Emissionsspektrum der ersten fluoreszierenden Verbindung überlappt, und mit einem Emissionsspektrum, das zwischen 350 nm und 650 nm liegt, wobei die maximale Emissionsintensität zwischen 400 und 600 nm liegt; wobei vorzugsweise die zweite fluoreszierende Verbindung ausgewählt ist aus Bismethystyrylbenzol (bis-MSB), 1,4-di[2-(5-phenyloxazolyl)]benzol (POPOP), 9,10-Diphenylanthracen, 4-Ethoxy-*N*-(2',5'-di-*t*-butylphenyl)-1,8-naphthalimid und 3-Hydroxyflavon.

7. Material nach Anspruch 6, wobei die zweite fluoreszierende Verbindung in einer Menge von 0,01 bis 1 Masse-%, vorzugsweise in einer Menge von 0,01 bis 0,3 Masse-%, bezogen auf die Gesamtmasse des Materials, eingearbeitet ist.

8. Material nach einem der Ansprüche 4 bis 7, wobei die Polymermatrix ferner eine dritte fluoreszierende Verbindung enthält, die ausgewählt ist aus Verbindungen mit einem Absorptionsspektrum, das das Emissionsspektrum der zweiten fluoreszierenden Verbindung überlappt, und mit einem Emissionsspektrum, dessen maximale Emissionsintensität zwischen 500 nm und 650 nm liegt; wobei vorzugsweise die dritte fluoreszierende Verbindung ausgewählt ist aus Perylen, 4-Butylamino-*N*-(2',5'-di-*t*-butylphenyl)-1,8-naphthalimid und Verbindungen aus der Familie der Cumarine, beispielsweise Cumarine 1, 6, 30, 102, 151, 314, 343 und Acridingelb *"acridine yellow".*

9. Material nach Anspruch 8, wobei die dritte fluoreszierende Verbindung in einer Menge von 0,001 bis 0,1 Masse-%, vorzugsweise in einer Menge von 0,002 bis 0,05 Masse-%, bezogen auf die Gesamtmasse des Materials, eingearbeitet ist.

10. Material nach Anspruch 1, enthaltend eine erste fluoreszierende Verbindung, wie Biphenyl, in einer Konzentration von 16,65 Masse-%, bezogen auf die Gesamtmasse des Materials, eine zweite fluoreszierende Verbindung, wie Bis-methylstyrylbenzol oder 1,4-di[2(5-phenyloxazolyl)]benzol (POPOP), in einer Konzentration von 0,01 bis 0,3 Masse-%, vorzugsweise 0,1 Masse-%, bezogen auf die Gesamtmasse des Materials, und gegebenenfalls eine dritte fluoreszierende Verbindung, wie Perylen oder 4-Butylamino-*N*-(2',5'-di-*t*-butylphenyl)-1,8-naphthalimid in einer Konzentration von 0,002 bis 0,05 Masse-%, bezogen auf die Gesamtmasse des Materials, vorzugsweise 0,005 Masse-%, bezogen auf die Gesamtmasse des Materials, in einer Polymermatrix, die aus einem Styrolpolymer in einer Menge von 66,62 Masse-%, bezogen auf die Gesamtmasse des Materials, und 1,4-Butandiyldimethacrylat in einer Menge von 16,65 Masse-%, bezogen auf die Gesamtmasse des Materials, besteht.

11. Material nach einem der vorhergehenden Ansprüche, wobei ferner zumindest eine Borverbindung, wie Ortho-Carboran, in die Polymermatrix eingearbeitet ist, beispielsweise in einer Massenkonzentration von 1 % bis 10 Masse-%, vorzugsweise 3,68 Masse-%, bezogen auf die Gesamtmasse des Materials.

12. Kunststoff-Szintillator, hergestellt durch Formen des Materials nach einem der Ansprüche 1 bis 10.

13. Kunststoff-Szintillator, hergestellt durch Formen des Materials nach Anspruch 11.

14. Kunststoff-Szintillator nach Anspruch 12 oder 13, wobei der Szintillator ein Volumen von größer 1 L, beispielsweise von 1 L bis 2 L bzw. von 1 L bis 5 L hat.

15. Detektorschleuse enthaltend den Kunststoff-Szintillator nach einem der Ansprüche 12 bis 14.

16. Verfahren zum Unterscheiden eines Signals, das auf schnelle Neutronen zurückzuführen ist, von einem Signal, das auf Gammastrahlen zurückzuführen ist, in einer Strahlung, die schnelle Neutronen und Gammastrahlen umfasst, die von einer Mischquelle emittiert werden, wobei der Kunststoff-Szintillator nach Anspruch 12 der von der Mischquelle emittierten Strahlung ausgesetzt wird und das Signal, das auf schnelle Neutronen zurückzuführen ist, von dem Signal, das auf Gammastrahlen zurückzuführen ist, durch Impulsformdiskriminierung (*"Pulse Charge Discrimination"* oder "*PSD"* im Englischen) getrennt wird.

17. Verfahren zum Unterscheiden eines Signals, das auf schnelle Neutronen zurückzuführen ist, von einem Signal, das auf thermische Neutronen zurückzuführen ist, und von einem Signal, das auf Gammastrahlen zurückzuführen ist, in einer Strahlung, die schnelle Neutronen, thermische Neutronen und Gammastrahlen umfasst, die von einer Mischquelle emittiert werden, wobei der Kunststoff-Szintillator nach Anspruch 13 der von der Mischquelle emittierten Strahlung ausgesetzt wird und das Signal, das auf schnelle Neutronen zurückzuführen ist, von dem Signal, das auf thermische Neutronen zurückzuführen ist, und von dem Signal, das auf Gammastrahlen zurückzuführen ist, durch Impulsformdiskriminierung (*"Pulse Shape Discrimination"* oder *"PSD"* im Englischen) getrennt wird.

## Claims

1. A plastic scintillator material comprising a polymeric matrix into which is incorporated at least one fluorescent compound at a mass concentration greater than or equal to 10% by mass of the total mass of the material, wherein the polymeric matrix consists of a crosslinked polymer obtainable by polymerization of a mixture comprising at least one aromatic monomer and at least one monomer playing the role of a crosslinking agent selected from among alkyl diacrylates, alkyl dimethacrylates, and mixtures thereof, the molar proportions of the monomer playing the role of a crosslinking agent and of the aromatic monomer in the mixture being from 10% to 50% and from 90% to 50%, respectively; preferably the molar proportions of the crosslinking agent and of the aromatic monomer in the mixture are from 15% to 20% and from 85% to 80%, respectively.

2. The material according to claim 1, wherein the aromatic monomer is selected from styrene; styrenes substituted with one or several alkyl group(s) such as t-butylstyrene and its isomers, vinyltoluene and its isomers, and vinylxylene and its isomers; vinylnaphthalene optionally substituted with one or several alkyl group(s); *N*-vinylcarbazole; and mixtures thereof.

3. The material according to any one of the preceding claims, wherein the monomer playing the role of a crosslinking agent is 1,4-butanediyl dimethacrylate.

4. The material according to any one of the preceding claims, wherein the polymeric matrix contains as a fluorescent compound, a first fluorescent compound, selected from among compounds having an absorption spectrum for which the maximum absorption intensity is located between 250 nm and 350 nm, for example is 300 nm, and an emission spectrum which is located between 340 nm and 400 nm; preferably the first fluorescent compound is biphenyl.

5. The material according to claim 4, wherein the 1st fluorescent compound is incorporated in an amount from 10% to 30% by mass, for example 16.65% by mass, of the total mass of the material.

6. The material according to any one of claims 4 to 5, wherein the polymeric matrix further contains a second fluorescent compound selected from among compounds having an absorption spectrum which covers the emission spectrum of the first fluorescent compound, and an emission spectrum which is located between 350 nm and 650 nm, with a maximum emission intensity between 400 and 600 nm; preferably, the second fluorescent compound is selected from among bis-methystyrylbenzene (bis-MSB), 1,4-di-[2-(5-phenyloxazolyl)]benzene (POPOP), 9,10-diphenylanthracene, 4-éthoxy-*N*-(2',5'-di-*t-*butylphenyl)-1,8-naphthalimide, and 3-hydroxyflavone.

7. The material according to claim 6, wherein the second fluorescent compound is incorporated in an amount from 0.01% to 1% by mass, preferably in an amount from 0.01% to 0.3% by mass of the total mass of the material.

8. The material according to any one of claims 4 to 7, wherein the polymeric matrix further contains a third fluorescent compound selected from among compounds having an absorption spectrum which covers the emission spectrum of the second fluorescent compound, and an emission spectrum for which the maximum emission intensity is located between 500 nm and 650 nm; preferably the third fluorescent compound is selected from among perylene, 4-butylamino-*N*-(2',5'-di-*t*-butylphenyl)-1,8-naphthalimide, and compounds from the family of cumarins, for example cumarins 1, 6, 30, 102, 151, 314, 343 and yellow acridine « *acridine yellow* ».

9. The material according to claim 8, wherein the third fluorescent compound is incorporated in an amount from 0.001% to 0.1% by mass, preferably in an amount from 0.002% to 0.05% by mass of the total mass of the material.

10. The material according to claim 1, comprising a first fluorescent compound, such as biphenyl, at a concentration of 16.65% by mass of the total mass of the material, a second fluorescent compound such as bis-methylstyrylbenzene or 1,4-di[2(5-phenyloxazolyl)]benzene (POPOP), at a concentration from 0.01% to 0.3% by mass, preferably 0.1% by mass of the total mass of the material, and optionally a third fluorescent compound such as perylene or 4-butylamino-*N*-(2',5'-di-*t*-butylphenyl)-1,8-naphthalimide at a concentration from 0.002% to 0.05% by mass of the total mass of the material, preferably 0.005% by mass of the total mass of the material, in a polymeric matrix consisting of a polymer of styrene in an amount of 66.62% by mass of the total mass of the material and of 1,4-butanediyl dimethacrylate, in an amount of 16.65% by mass of the total mass of the material.

11. The material according to any one of the preceding claims, wherein, further, at least one boron-containing compound such as ortho-carborane is Incorporated into the polymeric matrix, for example at a mass concentration from 1% to 10%, preferably 3.68% by mass of the total mass of the material.

12. A plastic scintillator prepared by shaping the material according to any one of claims 1 to 10.

13. A plastic scintillator prepared by shaping the material according to claim 11.

14. The plastic scintillator according to claim 12 or 13, wherein the scintillator has a volume greater than 1L, for example from 1 L to 2 L, or even from 1 L to 5 L.

15. A detection portal comprising the plastic scintillator according to any one of claims 12 to 14.

16. A method for discriminating a signal due to fast neutrons from a signal due to gamma rays in a radiation comprising fast neutrons and gamma rays emitted by a mixed source, in which the plastic scintillator according to claim 12, is exposed to said radiation emitted by the mixed source, and the signal due to fast neutrons is separated from the signal due to gamma rays by pulse charge discrimination (PSD).

17. A method for discriminating from each other, a signal due to fast neutrons, a signal due to thermal neutrons, and a signal due to gamma rays in a radiation comprising fast neutrons, thermal neutrons and gamma rays emitted by a mixed source, in which the plastic scintillator according to claim 13 is exposed to said radiation emitted by the mixed source and the signal due to fast neutrons is separated from the signal due to thermal neutrons, and from the signal due to gamma rays by pulse shape discrimination (PSD).
